# EUROPÄISCHE PATENTSCHRIFT

(11) **EP 3 295 367 B1**
(45) Veröffentlichungstag und Bekanntmachung des Hinweises auf die Patenterteilung: **15.09.2021**
(21) Anmeldenummer: 16724847.5
(22) Anmeldetag: 27.04.2016
(51) Int. Cl.: G06K 9/00, G06K 9/22

(54) **VORRICHTUNG ZUM IDENTIFIZIEREN VON FUSSBODENBEREICHEN**
DEVICE FOR IDENTIFYING FLOOR REGIONS
DISPOSITIF D'IDENTIFICATION DE ZONES DE SOL

(30) Priorität: 12.05.2015 DE 102015107465
(43) Veröffentlichungstag der Anmeldung: 21.03.2018
(73) Patentinhaber: Fritz Egger GmbH & Co. OG, 6380 St. Johann in Tirol (AT)
(72) Erfinder: MÜLLER, Stefan, 6380 St. Johann in Tirol (AT); HÖGLAUER, Hubert, 83317 Teisendorf (DE); DE LEÓN, Fabian, 46569 Hünxe (DE)
(74) Vertreter: Cohausz & Florack
(86) Internationale Anmeldenummer: PCT/EP2016/059347
(87) Internationale Veröffentlichungsnummer: WO 2016/180634

(56) Entgegenhaltungen:
- US-A1- 2002 123 942
- US-A1- 2008 071 559
- US-B1- 6 226 004

## Beschreibung

Die Erfindung betrifft eine Vorrichtung zum Identifizieren von mindestens einem mit einem Fußbodendekor zu überlagernden Fußbodenbereich eines dreidimensionalen Raums. Die Erfindung betrifft ferner ein mobiles Gerät umfassend die Vorrichtung, ein Verfahren zum Identifizieren von Fußbodenbereichen und ein Computerprogramm zum Identifizieren von Fußbodenbereichen.

Um einen Fußboden mit einem Fußbodenbelag, beispielsweise bestehend aus Laminatfußbodenpaneelen, zu versehen, ist es zunächst erforderlich, einen geeigneten Fußbodenbelag auszuwählen. Muster von unterschiedlichen Fußbodenbelegen finden sich beispielsweise im Internet bei verschiedenen Anbietern oder auch in Ausstellungsräumen von diesen Anbietern. Um vor einer Auswahl und Verlegung eines Fußbodenbelags mit einem bestimmten Dekor einen Eindruck über dessen Wirkung im Raum zu erhalten, ist es derzeit lediglich möglich, verschiedene Musterbelege zu erwerben und in dem Raum zu platzieren. Allerdings lässt sich hierdurch kaum ein realistischer Eindruck eines Raumbelags in diesem Raum gewinnen. Es besteht daher ein Bedarf, eine benutzerfreundliche Möglichkeit zu schaffen, um einem Benutzer vor einer tatsächlichen Verlegung eines Bodenbelags in einem Raum einen realistischen Eindruck von einem Bodenbelag zur Verfügung zu stellen.

In der heutigen Zeit wird in verschiedenen technischen Gebieten bereits an Projekten gearbeitet, bei denen Objekte dreidimensional erfasst und die gewonnenen dreidimensionalen Bilddaten je nach Anwendungszweck weiter verwendet werden. Ein derzeit populäres Beispiel ist der dreidimensionale Drucker. Der dreidimensionale Drucker erfasst insbesondere über eine geeignete optische Erfassungseinrichtung ein Objekt. Danach wird mittels der erfassten dreidimensionalen Bilddaten des Objekts eine Replikation des Objekts ausgedruckt.

Ferner finden sich im Stand der Technik bereits mobile Geräte, wie mobile Telefone oder Tablet-Computer, die eingerichtet sind, dreidimensionale Objekte bzw. Räume zu erfassen und anschließend, beispielsweise auf dem Bildschirm des mobilen Geräts, darzustellen. Ein mobiles Gerät ist hierfür mit einer optischen Erfassungseinrichtung, insbesondere einem Kamerasystem und einem dreidimensionalen Bildverarbeitungssystem, ausgestattet. Die optische Erfassungseinrichtung kann auf den gewünschten Raum ausgerichtet werden. Die erfassten dreidimensionalen Bilddaten können Bildkoordinatendaten umfassen, um eine vorzugsweise maßstabsgetreue Darstellung des erfassten Raums auf einem Bildschirm zu ermöglichen.

Sämtlichen Vorrichtungen zur dreidimensionalen Erfassung von Räumen ist jedoch gemein, dass sie den dreidimensionalen Raum als zusammenhängendes Modell erfassen und darstellen. Nachteilig hieran ist, dass zwar Objekte manuell in das dreidimensionale Modell eingefügt und dargestellt werden können. Aber die Stand der Technik Vorrichtungen sind nicht dazu in der Lage, das oben beschriebene Problem zu lösen. Insbesondere ist eine automatische Ersetzung bzw. Überlagerung von Elementen nicht möglich. Aufgrund des zusammenhängenden Modells des dreidimensionalen Raums kann der Fußbodenbereich des Raums nicht von anderen Elementen des Raums differenziert werden.

Ein weiteres Problem des Standes der Technik besteht darin, dass Ungenauigkeiten bei der Erfassung von dreidimensionalen Bilddaten auftreten. Besondere Problematiken treten insbesondere dann auf, wenn die 3D-Erfassungseinrichtung in einem mobilen Gerät untergebracht, direkt an einem mobilen Gerät angedockt oder kabelgebunden oder drahtlos mit dem Mobilgerät verbunden ist. So führen Bewegungen eines Benutzers einer entsprechenden 3D-Erfassungseinrichtung zu Ungenauigkeiten. Des Weiteren verfügen alle Erfassungseinrichtungen zusätzlich über Messungenauigkeiten.

Aus der Druckschrift US 2008/0071559 A1 ist eine Möglichkeit zur Erleichterung des Einkaufs eines materiellen Objekts über ein Netzwerk unter Verwendung eines mobilen Geräts bekannt, wobei das Verfahren die Beschaffung einer grafischen Darstellung einer Szene einer lokalen Umgebung mit Hilfe eines Sensors des mobilen Geräts und von grafischen Objektdaten umfasst, mit denen eine dreidimensionale Darstellung des materiellen Objekts auf dem mobilen Gerät gerendert wird. Die dreidimensionale Darstellung des materiellen Objekts zusammen mit der grafischen Darstellung der Szene kann über das mobile Gerät angezeigt werden, so dass das Aussehen des materiellen Objekts in der Szene simuliert wird, wobei das Objekt Teile der Szene überlagert.

Daher liegt der Erfindung die Aufgabe zugrunde, eine Vorrichtung zum Identifizieren von Fußbodenbereichen eines dreidimensionalen Raums zur Verfügung zu stellen, welche eine automatische Überlagerung bzw. Ersetzung des Fußbodenbereichs mit einem insbesondere individuellen Fußbodendekor ermöglicht.

Die Aufgabe wird gemäß einem ersten Aspekt der Erfindung durch den Gegenstand des Patentanspruchs 1 gelöst. Die Vorrichtung zum Identifizieren von mindestens einem mit einem Fußbodendekor zu überlagernden Fußbodenbereich eines dreidimensionalen Raums, wobei die Vorrichtung umfasst:
- ein Rastermodul eingerichtet zum Unterteilen von bereitgestellten dreidimensionalen Bilddaten des Raums in eine Mehrzahl von Subbereichen durch Überlagern der dreidimensionalen Bilddaten mit einem Raster,
- ein Auswertemodul eingerichtet zum Ermitteln von mindestens einem Raumparameterwert von einer Mehrzahl von benachbarten Subbereichen aus bereitgestellten Bildkoordinatendaten der dreidimensionalen Bilddaten der benachbarten Subbereiche, wobei als Raumparameterwert eine Steigung aus den mindestens zwei aus den Bildkoordinatendaten bestimmbaren Höhenangaben der benachbarten Subbereiche bestimmt wird,
- ein Vergleichsmodul eingerichtet zum Vergleichen des ermittelten Raumparameterwerts der benachbarten Subbereiche mit einem Vergleichsraumparameterwert in Form einer Vergleichsgesamtsteigung, und
- ein Identifizierungsmodul eingerichtet zum Identifizieren der benachbarten Subbereiche als zumindest einen Teil eines Fußbodenbereichs wenn die Steigung der benachbarten Subbereiche unterhalb der Vergleichsgesamtsteigung liegt, und
- ein Bildbearbeitungsmodul eingerichtet zum Überlagern des mindestens einen identifizierten Fußbodenbereichs der dreidimensionalen Bilddaten des Raums mit mindestens einem Fußbodendekor.

Im Gegensatz zum Stand der Technik werden durch die erfindungsgemäße Vorrichtung die Fußbodenbereiche separiert bzw. identifiziert, so dass sie mit einem gewünschten Fußbodendekor überlagert werden können. Insbesondere ist erfindungsgemäß erkannt worden, dass basierend auf den bereitgestellten dreidimensionalen Bilddaten zwischen Fußbodenbereichen und nicht Fußbodenbereichen differenziert werden kann. Das zuvor zusammenhängende dreidimensionale Modell wird in mindestens zwei unterschiedliche Bereiche separiert.

Die erfindungsgemäße Vorrichtung kann aus Hardware- und/oder Softwarekomponenten gebildet sein. Der Vorrichtung zum Identifizieren von Fußbodenbereichen werden zunächst dreidimensionale Bilddaten zur Verfügung gestellt. Beispielsweise können die dreidimensionalen Bilddaten von einer Erfassungseinrichtung, umfassend ein Kamerasystem und ein dreidimensionales Bildbearbeitungssystem, geliefert werden.

Ein Rastermodul unterteilt die bereitgestellten dreidimensionalen Bilddaten in Subbereiche. Ein Subbereich kann mindestens ein Pixel bzw. Bildelement umfassen. Insbesondere kann ein Subbereich derart gewählt werden, dass eine ausreichend schnelle Verarbeitung möglich ist und gleichzeitig eine ausreichend hohe Auflösung zur Verfügung gestellt wird. Die Auflösung sollte derart gewählt werden, dass eine ausreichend scharfe Trennung/Separierung von Fußbodenbereichen und anderen Raumelementen, wie Wänden, Möbeln, auf dem Fußbodenbereiche liegende Teppiche, etc. möglich ist. Vorzugsweise können die dreidimensionalen Bilddaten in Subbereiche gleicher Größe und/oder gleicher Form unterteilt sein und insbesondere eine Mehrzahl von Pixeln umfassen.

Basierend auf den bereitgestellten dreidimensionalen Bilddaten ermittelt ein Auswertemodul mindestens einen Raumparameterwert für mindestens einen Subbereich. In einer Ausführungsform, die nicht unter die Ansprüche fällt umfassen die bereitgestellten Bilddaten Farbinformationen und Bildkoordinatendaten. Aus diesen Daten bzw. Informationen kann das Auswertemodul mindestens einen Raumparameterwert des Subbereichs ableiten bzw. bestimmen. Das Auswertemodul kann insbesondere die Farbinformationen und/oder Bildkoordinatendaten eines Subbereichs untersuchen und daraus mindestens einen Raumparameterwert ermitteln. Es versteht sich, dass das Auswertemodul dies zumindest für alle relevanten Subbereiche durchführen kann.

Ferner umfasst die Vorrichtung ein Vergleichsmodul zum Vergleichen eines zuvor bestimmten Raumparameterwerts mit einem (vorgegebenen) Vergleichsraumparameterwert bzw. einem Schwellwert entsprechend dem ermittelten Raumparameter. Der Vergleichsraumparameterwert kann beispielsweise basierend auf Testergebnissen und/oder in einem (vorherigen) Kalibrierungsschritt bestimmt werden. Insbesondere kann das Vergleichsmodul feststellen, ob der Vergleichsraumparameterwert von dem bestimmten Raumparameterwert überschritten worden ist oder nicht und/oder der Raumparameterwert im Wesentlichen gleich dem Vergleichsraumparameterwert ist.

Das Identifizierungsmodul ist dazu eingerichtet, basierend auf den Informationen vom Vergleichsmodul zu entscheiden, ob es sich bei dem Subbereich um einen Fußbodenbereich handelt oder nicht. Bei einem positiven Vergleichsergebnis, also z.B. einem Unterschreiten des Vergleichsraumparameterwerts durch den ermittelten Raumparameterwert, identifiziert das Identifizierungsmodul den entsprechenden Subbereich als zumindest Teil eines Fußbodenbereichs. Ferner kann, beispielsweise durch ein Kennzeichnungsmodul, ein als Fußbodenbereich identifizierter Subbereich, also die entsprechenden dreidimensionalen Bilddaten, in Abhängigkeit des Identifikationsresultats entsprechend gekennzeichnet werden. Beispielsweise kann durch Setzen oder nicht Setzen von mindestens einem bit ein Subbereich gekennzeichnet werden.

Ist das Vergleichsergebnis negativ, wird der Subbereich (zumindest vorläufig) als nicht Teil des Fußbodenbereichs, also als ein anderes Raumelement, identifiziert.

Die vorliegende Erfindung ermöglicht insbesondere, aus den zusammenhängenden dreidimensionalen Bilddaten die Bereiche zu separieren, welche von Interesse sind, vorliegend also die Fußbodenbereiche.

In einer Ausführungsform, die nicht unter die Ansprüche fällt kann das Auswertemodul zum Ermitteln eines Abmessungsparameters des Subbereichs aus den dreidimensionalen Bilddaten eingerichtet sein. Insbesondere kann zumindest eine Höhenangabe des Subbereichs ermittelt werden. Die Höhenangabe kann beispielsweise aus den Bildkoordinatendaten eines Subbereichs bestimmt werden. In einem einfachen Fall, wie bei einem kartesischen Koordinatensystem, kann die Höhenangabe unmittelbar ein Koordinatenwert eines Koordinatenvektors (x, y, z) des Subbereichs sein. Für den Fall, dass die dreidimensionalen Bilddaten eines Subbereichs zwei oder mehr unterschiedliche Bildkoordinatendaten umfassen, kann als Höhenangabe der Mittelwert gebildet oder der maximale oder minimale Wert herangezogen werden.

In einer Ausführungsform, die nicht unter die Ansprüche fällt kann das Vergleichsmodul zum Vergleichen des ermittelten Abmessungsparameterwerts, insbesondere der Höhenangabe des Subbereichs und/oder der Steigung des Subbereichs, mit einem Vergleichsabmessungsparameterwert, wie einem Höhenschwellwert bzw. einem Steigungsschwellwert, in einem ersten Vergleichsschritt eingerichtet sein. Es ist insbesondere erkannt worden, dass eine Höhenangabe als Raumparameterwert ein besonders relevantes Kriterium für die Separierung eines Fußbodenbereichs darstellt. In einem dreidimensionalen Raum befindet sich der Boden (in der Regel) auf dem tiefsten Punkt des Raums. Der tiefste Punkt des Raums kann zudem als Referenzwert bzw. als Vergleichsraumparameterwert gesetzt werden. Dieser kann beispielsweise stets in einem Kalibrierungsschritt, z.B. von einem Kalibrierungsmodul, vor oder während der Erfassung der dreidimensionalen Bilddaten erfasst und/oder bestimmt worden sein. Es versteht sich, dass in dem Schwellwert ein Toleranzbereich beachtet werden kann, um z.B. Unebenheiten im Boden zu berücksichtigen. Neben den Unebenheiten im Boden können die Bewegungen eines Benutzers, der die Erfassungseinrichtung hält, und/oder die Ungenauigkeiten der Lagesensoren, Kompasssensoren und/oder Bewegungssensoren der Erfassungseinrichtung zu Ungenauigkeiten führen. Diese Ungenauigkeiten und das Problem, dass in der Regel kein Gebäude vollkommen waagerecht steht, können dazu führen, dass sich die Ungenauigkeiten auf bis zu 20 cm und mehr zusammenaddieren können. Wird ein entsprechender Vergleichsraumparameterwert gesetzt, ist eine einfache Differenzierung zwischen Fußbodenbereichen und anderen Objekten des Raums anhand des Vergleichsergebnisses möglich. Überschreitet beispielsweise die Höhenangabe hs eines Subbereichs einen Vergleichsraumparameterwert hver = (tiefster Punkt + Toleranz) nicht, dann identifiziert das Identifizierungsmodul den Subbereich als zumindest Teil eines Fußbodenbereichs. Bei einem anderen Ergebnis kann der entsprechende Subbereich zumindest zunächst als ein Raumelement bewertet werden, das keinen Fußbodenbereich darstellt.

In einer weiteren Ausführungsform, die nicht unter die Ansprüche fällt kann es sich bei dem Abmessungsparameter auch um eine Steigung handeln. Insbesondere kann das Auswertemodul eine Steigung eines Subbereichs aus den dreidimensionalen Bilddaten ermitteln. Umfasst ein Subbereich zumindest zwei Höhenangaben, so kann aus diesen mindestens zwei Höhenangaben eine Steigung bestimmt werden. Dies kann dann von dem Vergleichsmodul mit einem vorgegebenen Vergleichsteigungsschwellwert verglichen werden. Liegt die ermittelte Steigung des Subbereichs unterhalb des vorgegebenen Vergleichsteigungsschwellwerts, kann der Subbereich von dem Identifizierungsmodul als Fußbodenbereich eingestuft bzw. identifiziert werden.

Von einer Mehrzahl von benachbarten, insbesondere zusammenhängenden, Subbereichen wird die Gesamtsteigung bestimmt. Die Steigung wird von dem Auswertemodul aus den mindestens zwei Höhenangaben der Mehrzahl von Subbereichen berechnet. Liegt diese unterhalb einer Vergleichsgesamtsteigung, werden sämtliche Subbereiche als Fußbodenbereiche von dem Identifizierungsmodul bewertet. Eine beispielhafte Vergleichsgesamtsteigung für einen Umkreis von 1 m bis 2 m kann zwischen 0,5% bis 1,5 % liegen, vorzugsweise 1 % sein. (Nur) wenn die Subbereiche in diesem Umkreis eine Gesamtsteigung kleiner als diese Vergleichsgesamtsteigung aufweisen, können diese Subbereiche als Fußbodenbereiche eingestuft bzw. identifiziert werden.

Es versteht sich, dass die Steigung auch durch einen Winkel, aus dem die Steigung abgeleitet werden kann, ausgedrückt sein kann. In diesem Fall kann ein Vergleichswinkel für die Identifizierung von Fußbodenbereichen vorgegeben sein.

Darüber hinaus kann gemäß einer weiteren Ausführungsform das Auswertemodul zum Ermitteln eines sichtbaren Oberflächenparameterwerts eines Subbereichs von dreidimensionalen Bilddaten eingerichtet sein. Insbesondere kann/können mindestens ein Farbwert und/oder mindestens ein Strukturwert des Subbereichs von dem Auswertemodul aus den in den dreidimensionalen Bilddaten vorhandenen Farbinformationen bestimmt werden. Beispielsweise kann aus den Pixeldaten des Subbereichs ein Farbwert abgeleitet werden, indem die im Pixel verwendete Kodierung (Farbraum und Farbtiefe) der Farbe analysiert wird. Auch kann ein Strukturparameter aus den Bilddaten des Subbereichs ermittelt werden. Beispielsweise kann zunächst ein Histogramm erstellt und dieses als Strukturparameterwert verwendet oder daraus ein Strukturparameterwert ermittelt werden. Es versteht sich, dass andere Vorgehensweisen möglich sind. Das Vergleichsmodul kann zum Vergleichen des ermittelten sichtbaren Oberflächenparameterwerts des Subbereichs mit einem Vergleichsoberflächenparameterwert in einem weiteren Vergleichsschritt eingerichtet sein.

Der mindestens eine Farbwert kann vorzugsweise ein Helligkeitswert, ein Farbwinkelwert und/oder ein Farbintensitätswert sein. Für jeden dieser Farbwerte kann ein entsprechender Vergleichsfarbwert vorgegeben oder bestimmt werden. In einer bevorzugten Ausführungsform kann das Vergleichsmodul zwei oder mehr Farbwerte eines Subbereichs auswerten. Beispielsweise können zumindest ein Helligkeitswert und ein Farbwinkelwert von dem Auswertemodul für einen Subbereich bestimmt werden. Das Vergleichsmodul kann eingerichtet sein, die ermittelten Farbwerte mit entsprechenden Vergleichsfarbwerten zu vergleichen. Es ist erkannt worden, dass Helligkeitswerte beispielsweise aufgrund von Schattenwurf größeren Schwankungen unterliegen können, ohne dass hieraus unmittelbar abgeleitet werden kann, dass es sich bei dem Subbereich nicht um einen Fußbodenbereich handelt. Wenn zusätzlich der Farbwinkel ermittelt wird und dieser innerhalb eines vorgebbaren oder während des Identifizierungsprozesses bestimmbaren Vergleichsfarbwinkelbereich liegt, kann trotz evtl. deutlicher Helligkeitsunterschiede der Subbereich als Fußbodenbereich identifiziert werden.

Es ist zudem möglich, dass zur Detektion eines Strukturparameters eine Mehrzahl von benachbarten Subbereichen, beispielsweise von dem Rastermodul, zu einem übergeordneten Bereich zusammengefasst wird. Der Vorteil hiervon ist, dass sich bestimmte Strukturen, wie Muster und Formen, ggf. erst bei einem größeren Subbereich bestimmen lassen. Insbesondere kann aus den Farbwerten einer Mehrzahl von (zusammenhängenden) Subbereichen ein Strukturwert abgeleitet werden.

Farben/Strukturen können vorzugsweise mittels Kantendetektionsfilter (Edge-Detection-Filter) und/oder Analysefilter ausgewertet werden. Eine besondere Herausforderung stellen z.B. Fliesenfugen dar. Vorzugsweise kann ein Kantendetektionsfilter eingerichtet sein, um bei zusammenhängenden Subbereichen ein (sich wiederholendes) Fugenmuster zu erkennen. Ist ein entsprechendes Muster detektiert worden, kann die vorliegende Vorrichtung vorzugweise selbstlernend die Erkennungsgewichtung verändern, um stabilere Ergebnisse zu erhalten. Beispielsweise kann zumindest der mindestens eine Vergleichsoberflächenparameterwert abhängig von dem erkannten Fugenmuster oder einem anderen erkannten Muster (automatisch) während des Verfahrens angepasst werden. Die Zuverlässigkeit der Separation zwischen Fußbodenbereichen und nicht Fußbodenbereichen kann weiter erhöht werden.

Grundsätzlich kann mindestens ein Vergleichsoberflächenparameterwert fest vorgegeben sein. Alternativ oder zusätzlich kann der Vergleichsoberflächenparameterwert während der Auswertung von bereitgestellten dreidimensionalen Bilddaten eines Raums bestimmt werden. Gemäß einer weiteren Ausführungsform kann die Vorrichtung ein Kalibrierungsmodul, eingerichtet zum Bestimmen des Vergleichsoberflächenparameterwerts, abhängig von einem bereits als Fußbodenbereich identifizierten Subbereich umfassen. Vorzugweise kann das Kalibrierungsmodul von einem als Fußbodenbereich identifizierten Subbereich den mindestens einen ermittelten Oberflächenparameterwert, wie einen Farbwert und/oder einen Strukturwert, erfassen. Der erfasste Oberflächenparameterwert kann als Vergleichsoberflächenparameterwert von dem Kalibrierungsmodul gesetzt werden.

Ein Vergleichsoberflächenparameterwert, der auf einem sichtbaren Oberflächenparameterwert basiert, kann vorzugsweise zur Detektion von Fußbodenbereichen, wie Treppenstufen oder Fußbodenbereich mit unterschiedlichen Höheniveaus, eingesetzt werden. Insbesondere kann gemäß einer Ausführungsform das Vergleichsmodul zum Vergleichen des sichtbaren Oberflächenparameterwerts eines Subbereichs, der vorläufig aufgrund des negativen Vergleichsergebnisses von seinem Abmessungsparameter nicht als Fußbodenbereich identifiziert wurde, mit einem derartigen Vergleichsoberflächenparameterwert in einem weiteren Vergleichsschritt eingerichtet sein. Ist das Vergleichsergebnis positiv, so kann das Identifizierungsmodul den Subbereich in einem weiteren Identifizierungsschritt (doch noch) als Fußbodenbereich (z.B. als Treppenbereich) identifizieren. Um Fehlidentifikationen zu vermeiden, können Randbedingungen, wie maximaler Abstand eines Subbereichs zu einem als nächstliegenden Fußbodenbereich identifizierten Subbereich, etc. festgelegt sein.

Ferner kann ein Vergleichsoberflächenparameterwert, der auf einem Oberflächenparameterwert basiert, vorzugsweise zur Detektion von unterschiedlichen Fußbodenbereichen eingesetzt werden. Gemäß einer weiteren Ausführungsform kann das Vergleichsmodul zum Vergleichen des sichtbaren Oberflächenparameterwerts eines Subbereichs, der bereits als Fußbodenbereich identifiziert worden ist, mit einem derartigen Vergleichsoberflächenparameterwert in einem weiteren Vergleichsschritt eingerichtet sein. Vorzugsweise können sowohl der mindestens eine Farbwert als auch der mindestens eine Strukturwert verglichen werden. Bei einem positiven Vergleichsergebnis, wenn also der Oberflächenparameterwert eines Subbereichs im Wesentlichen dem Vergleichsoberflächenparameterwert entspricht, also beispielsweise ein Farbwert (mit üblichen Toleranzen) dem Vergleichsfarbwert entspricht, kann das Identifizierungsmodul den entsprechenden Subbereich als den gleichen Fußbodenbereich identifizieren. Bei einem negativen Vergleichsergebnis identifiziert das Identifizierungsmodul den entsprechenden Subbereich als einen weiteren, z.B. zweiten Fußbodenbereich.

Dies ermöglicht insbesondere zwischen mindestens zwei unterschiedlichen Fußbodenbereichen zu differenzieren. Diese können entsprechend gekennzeichnet werden (setzen von mindestens zwei bits) und deren Bilddaten beispielsweise mit Bilddaten von unterschiedlichen Fußbodendekoren überlagert/ersetzt werden.

Darüber hinaus kann vorgesehen sein, den Winkel zwischen benachbarten Subbereichen zu bestimmen. Wird insbesondere ein im Wesentlichen rechter Winkel zwischen zwei Subbereichen erkannt, kann dies zur Nach-Kalibrierung genutzt werden. Beispielsweise kann aus der Detektion eines rechten Winkels auf das Ende eines Bodenbereichs geschlossen werden. Die Höhenwerte eines Subbereichs können dann zur Normalisierung des Bodenbereichs herangezogen werden.

Gemäß einer weiteren Ausführungsform kann die Vorrichtung ein Bildbearbeitungsmodul eingerichtet zum Überlagern des mindestens einen identifizierten (und vorzugsweise entsprechenden gekennzeichneten) Fußbodenbereichs der dreidimensionalen Bilddaten des Raums mit mindestens einem Fußbodendekor umfassen. Das Bildbearbeitungsmodul kann zum Bereitstellen der überlagerten Bilddaten für eine Anzeigeeinrichtung eingerichtet sein. Beispielsweise kann die Vorrichtung eine Datenbank umfassen oder eine Kommunikationsverbindung zu einer Datenbank aufweisen. In der Datenbank können verschiedene Fußbodenbelege, wie Laminatfußbodenpaneele, und deren Dekore hinterlegt sein. Das Bildbearbeitungsmodul ist insbesondere eingerichtet, den mindestens einen identifizierten Fußbodenbereich, also sämtliche insbesondere entsprechend gekennzeichnete Subbereiche, automatisch mit einem gewünschten bzw. ausgewählten Fußbodendekor, z.B. mittels eines Composing-Werkzeugs, zu überlagern. Die derart geänderten dreidimensionalen Bilddaten können einer Anzeigeeinrichtung zur Verfügung gestellt werden. In einfacher und insbesondere automatischer Weise werden nur die Bereiche in einem dreidimensionalen Raum durch gewünschte Fußbodendekore ersetzt, die Fußbodenbereiche darstellen.

Vorzugweise können nach Auswahl eines gewünschten Fußbodendekors und einem gewünschten Verlegemuster die dreidimensionalen Bilddaten in einer Datenbank gespeichert werden. Vorteilhafterweise können die dreidimensionalen Daten von einem Bodenverleger aufgerufen und zur (möglichst) identischen tatsächlichen Verlegung des Bodenbelags genutzt werden.

Ferner ist in einer bevorzugten Ausführungsform vorgesehen, dass die Vorrichtung ein Kalkulationsmodul eingerichtet zum Bestimmen der Fußbodenfläche des identifizierten Fußbodenbereichs umfassen kann. Insbesondere kann aus den dreidimensionalen Bilddaten der als Fußbodenbereich identifizierten Subbereiche deren Gesamtfläche von dem Kalkulationsmodul berechnet werden. Beispielsweise kann der Umfang des identifizierten Fußbodenbereichs, insbesondere aus den entsprechend kalibrierten Bildkoordinatendaten des Fußbodenbereichs, ermittelt und daraus die Fläche berechnet werden. Das Kalkulationsmodul kann zum Bestimmen der Anzahl, der für den identifizierten Fußbodenbereich erforderlichen Fußbodenpakete, basierend auf der bestimmten Fußbodenfläche, eingerichtet sein. Fußbodenpaneele, insbesondere Laminatfußbodenpaneele, werden üblicherweise in vorkonfektionierten Paneelverpackungen verkauft, in denen jeweils eine bestimmte Anzahl Paneele verpackt ist. Für die zur Auswahl stehenden Dekore können in der Datenbank auch die entsprechenden vorkonfektionierten Fußbodenpakete abgespeichert sein. Dann kann basierend auf der Bodenfläche und der hinterlegten Daten für die Fußbodenpakete die für eine Verlegung der Bodenfläche mit den entsprechenden Paneelen erforderliche Anzahl der Fußbodenpakete bestimmt werden.

Ferner kann das Kalkulationsmodul vorzugsweise zum Bestimmen eines geometrischen Verlaufs des Umfangs der bestimmten Fußbodenfläche eingerichtet sein. Das Kalkulationsmodul kann zum Bestimmen der Anzahl von für den identifizierten Fußbodenbereich erforderlichen Fußbodenpaketen, basierend auf dem bestimmten Verlauf des Umfangs, eingerichtet sein. Es kann so ein genaueres Ergebnis erzielt werden, da der Verschnitt (besser) berücksichtigt werden kann. Zudem kann das Kalkulationsmodul basierend auf dem geometrischen Verlauf des Umfangs der bestimmten Fußbodenfläche evtl. erforderliche weitere Elemente zur Bodenverlegung, wie die Anzahl von Sockelleisten und/oder Befestigungsmittel für die Sockelleisten, automatisch bestimmen.

Ein weiterer Aspekt der Erfindung ist ein mobiles Gerät umfassend mindestens eine zuvor beschriebene Vorrichtung gemäß dem entsprechenden nebengeordneten Anspruch 7. Das mobile Gerät ist insbesondere eine mobile Rechenvorrichtung, wie ein tragbarer Computer, beispielsweise ein Laptop oder ein Tabletcomputer, oder ein tragbares Telefon, beispielsweise ein Smartphone.

Gemäß einer ersten Ausführungsform des erfindungsgemäßen mobilen Geräts kann das mobile Gerät mindestens eine optische Erfassungseinrichtung eingerichtet zum Erfassen eines dreidimensionalen Raums und zum Bereitstellen von dreidimensionalen Bilddaten des Raums umfassen. Vorzugsweise kann das mobile Gerät mindestens eine Anzeigeeinrichtung eingerichtet zum Darstellen des dreidimensionalen Raums umfassen. Beispielsweise kann das mobile Gerät eine Anzeigeeinrichtung in Form eines Touchbildschirms aufweisen. Es versteht sich, dass auch andere optische Anzeigeeinrichtungen vorgesehen sein können. Neben einer Kameraeinheit umfasst die optische Anzeigeeinrichtung insbesondere ein dreidimensionales Bildverarbeitungssystem, um für die weitere Verarbeitung geeignete Bilddaten bereitzustellen. Hierzu kann beispielsweise auf Standardkomponenten zurückgegriffen werden. Indem die Vorrichtung in einem mobilen Gerät integriert ist, welches neben der Vorrichtung zur Identifizierung von Fußbodenbereichen auch eine optische Erfassungseinrichtung sowie eine optische Anzeigeeinrichtung umfasst, sind keine weiteren Geräte erforderlich, um einen Raum zu erfassen, erfindungsgemäß zu bewerten und dann entsprechend darzustellen. Zudem kann die erfindungsgemäße Vorrichtung zumindest teilweise die Hardware- und/oder Softwarekomponenten, wie die ohnehin vorgesehene Bildverarbeitungssoftware, nutzen. Ressourcen können so gespart werden.

Ein weiterer Aspekt der Erfindung ist ein Verfahren zum Identifizieren von mit einem Fußbodendekor zu überlagernden Fußbodenbereichen eines dreidimensionalen Raums gemäß dem unabhängigen Verfahrensanspruch nach Anspruch 9. Das Verfahren umfasst:
- Unterteilen, durch ein Rastermodul, von bereitgestellten dreidimensionalen Bilddaten des Raums in eine Mehrzahl von Subbereichen durch Überlagern der dreidimensionalen Bilddaten mit einem Raster,
- Ermitteln, durch ein Auswertemodul, von mindestens einem Raumparameterwert von einer Mehrzahl von benachbarten Subbereichen durch Untersuchen von bereitgestellten Bildkoordinatendaten der dreidimensionalen Bilddaten der benachbarten Subbereiche, wobei als Raumparameterwert eine Steigung aus den mindestens zwei aus den Bildkoordinatendaten bestimmbaren Höhenangaben der benachbarten Subbereiche bestimmt wird,
- Vergleichen, durch ein Vergleichsmodul, des ermittelten Raumparameterwerts der benachbarten Subbereiche mit einem Vergleichsraumparameterwert in Form einer Vergleichsgesamtsteigung,
- Identifizieren, durch ein Identifizierungsmodul, der benachbarten Subbereiche als zumindest einen Teil eines Fußbodenbereichs wenn die Steigung der benachbarten Subbereiche unterhalb der Vergleichsgesamtsteigung liegt, und
- Überlagern, durch ein Bildbearbeitungsmodul, des mindestens einen identifizierten Fußbodenbereichs der dreidimensionalen Bilddaten des Raums mit mindestens einem Fußbodendekor.

Die zuvor beschriebene Vorrichtung ist insbesondere zur Durchführung des erfindungsgemäßen Verfahrens eingerichtet.

Ein noch weiterer Aspekt der Erfindung ist ein Computerprogramm nach Anspruch 11 mit Instruktionen ausführbar auf einem Prozessor derart, dass eine Vorrichtung gemäß dem zuvor beschriebenen Verfahren betrieben wird.

Es gibt nun eine Vielzahl von Möglichkeiten, die erfindungsgemäße Vorrichtung, das erfindungsgemäße mobile Gerät, das erfindungsgemäße Identifizierungsverfahren und das erfindungsgemäße Computerprogramm auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt:
- Fig. 1: ein Ausführungsbeispiel einer Vorrichtung gemäß der vorliegenden Erfindung,
- Fig. 2: ein Ausführungsbeispiel eines mobilen Geräts gemäß der vorliegenden Erfindung,
- Fig. 3: einen beispielhaften dreidimensionalen Raum, bei dem Fußbodenbereiche identifiziert werden sollen,
- Fig. 4: ein Diagramm eines ersten Ausführungsbeispiels eines Verfahrens gemäß der vorliegenden Erfindung, und
- Fig. 5: ein Diagramm eines weiteren Ausführungsbeispiels eines Verfahrens gemäß der vorliegenden Erfindung.

In den Figuren werden für gleiche Elemente gleiche Bezugszeichen verwendet.

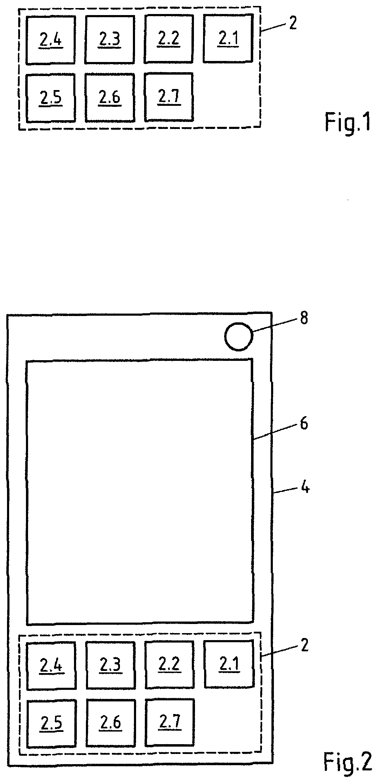

Figur 1 zeigt ein Ausführungsbeispiel einer Vorrichtung 2 gemäß der vorliegenden Erfindung. Die Vorrichtung 2 umfasst eine Mehrzahl von Modulen 2.1 bis 2.7. Die Module 2.1 bis 2.7 der Vorrichtung 2 können Hardware- und/oder Softwaremodule 2.1 bis 2.7 sein.

Zunächst umfasst die Vorrichtung ein Rastermodul 2.1. Dem Rastermodul 2.1 werden dreidimensionale Bilddaten eines Raums zur Verfügung gestellt. Das Rastermodul 2.1 ist dazu eingerichtet, die dreidimensionalen Bilddaten in eine Mehrzahl von Subbereiche zu unterteilen. Ein Subbereich kann zumindest ein Pixel, vorzugsweise eine geeignete Anzahl von Pixeln, umfassen.

Ferner ist ein Auswertemodul 2.2 vorgesehen. Das Auswertemodul 2.2 ist eingerichtet, um mindestens einen Raumparameterwert von einem Subbereich zu bestimmen. Als Raumparameterwert kann aus den bereitgestellten dreidimensionalen Bilddaten, wie den Farb- oder Strukturinformationen und/oder den Bildkoordinatendaten, insbesondere mindestens ein Abmessungsparameter, wie eine Höhenangabe des Subbereichs, und mindestens ein sichtbarer Oberflächenparameter, wie ein Farbwert, ermittelt werden.

Das in der Vorrichtung 2 vorgesehene Vergleichsmodul 2.3 ist eingerichtet, mindestens einen Vergleichsschritt durchzuführen. In diesem ersten Vergleichsschritt wird ein durch das Auswertemodul bestimmter Raumparameterwert mit einem z.B. vorgegebenen Vergleichsraumparameterwert verglichen. Das Ergebnis des Vergleichsergebnisses wird von dem Vergleichsmodul 2.3 einem Identifizierungsmodul 2.4 bereitgestellt.

Das Identifizierungsmodul 2.4 identifiziert einen Subbereich als zumindest einen Teil eines Fußbodenbereichs, wenn das Vergleichsergebnis positiv ist, also z.B. der Raumparameterwert des Subbereichs unterhalb des Vergleichsraumwerts liegt. Es versteht sich, dass je nach Raumparameterwert auch definiert sein kann, dass ein positives Ergebnis vorliegt, wenn der Raumparameterwert kleiner als der Vergleichsraumparameter und/oder im Wesentlichen gleich dem Vergleichsraumparameter ist.

Des Weiteren sind ein Kalibrierungsmodul 2.5, ein Kalkulationsmodul 2.6 und ein Bildbearbeitungsmodul 2.7 vorgesehen. Das (optionale) Kalibrierungsmodul 2.5 ist insbesondere dazu eingerichtet, während der Auswertung der dreidimensionalen Bilddaten individuelle Vergleichsparameterwerte basierend auf der teilweise bereits durchgeführten Auswertung, also beispielsweise basierend auf bereits als Fußbodenbereich identifizierten Subbereichen, zu bestimmen. Mit dem (optionalen) Kalkulationsmodul 2.6 werden vorzugsweise die für einen identifizierten Bodenbereich erforderlichen Fußbodenpakete bestimmt. Das (optionale) Bildbearbeitungsmodul 2.7 ist dazu eingerichtet, die identifizierten Fußbodenbereiche zu bearbeiten, insbesondere mit einem auswählbaren Fußbodendekor zu überlagern/ersetzen.

Es versteht sich, dass die einzelnen Module 2.1 bis 2.7 keine separaten Bauteile/Komponenten sein müssen, sondern durch zumindest teilweise gemeinsam genutzte Hardware- und/oder Softwarekomponenten realisiert sein können.

Die Figur 2 zeigt ein Ausführungsbeispiel eines mobilen Geräts 4. Das mobile Gerät 4 umfasst insbesondere die zuvor beschriebene Vorrichtung 2 mit den Modulen 2.1 bis 2.7. Beispielsweise kann die Vorrichtung 2 eine Hardwareeinrichtung mit einem Prozessor, Speichermittel, etc. sein. Auch kann die Vorrichtung 2 eine Softwareeinrichtung sein. In diesem Fall kann vorteilhafterweise die Hardware, wie Prozessor, Speichermittel, etc., von dem mobilen Gerät 4 zur Ausführung der Softwareeinrichtung genutzt werden. Es versteht sich, dass die Vorrichtung 2 aus Hardund Softwareeinrichtungen gebildet sein kann. Es versteht sich ferner, dass nicht sämtliche Module 2.1 bis 2.7 in dem mobilen Gerät 4 integriert sein müssen, sondern auch durch entfernt angeordnete und über ein Kommunikationsnetz verbundene Komponenten realisiert sein können.

Das vorliegende mobile Gerät 4, wie ein Tabletcomputer oder ein mobiles Telefon, umfasst eine Anzeigeeinrichtung 6 in Form eines Bildschirms 6, beispielsweise ein Touchscreen 6, und eine optische Erfassungseinrichtung 8, die insbesondere eine Kamera und ein dreidimensionales Bildverarbeitungssystem umfasst. Die optische Erfassungseinrichtung 8 ist dazu eingerichtet, einen dreidimensionalen Raum zu erfassen und dreidimensionale Bilddaten, beispielsweise durch geeignete Bildverarbeitungskomponenten des Bildverarbeitungssystems, bereitzustellen. Die erfassten dreidimensionalen Bilddaten können beispielsweise unmittelbar auf der Anzeigeneinrichtung 6 dargestellt werden. Um Bodenbereiche eines Raums zu identifizieren und beispielsweise einem Benutzer eine Überlagerung dieser Bodenbereiche mit unterschiedlichen Fußbodendekoren zu ermöglichen, werden die bereitgestellten dreidimensionalen Bilddaten von der Vorrichtung 2 bearbeitet.

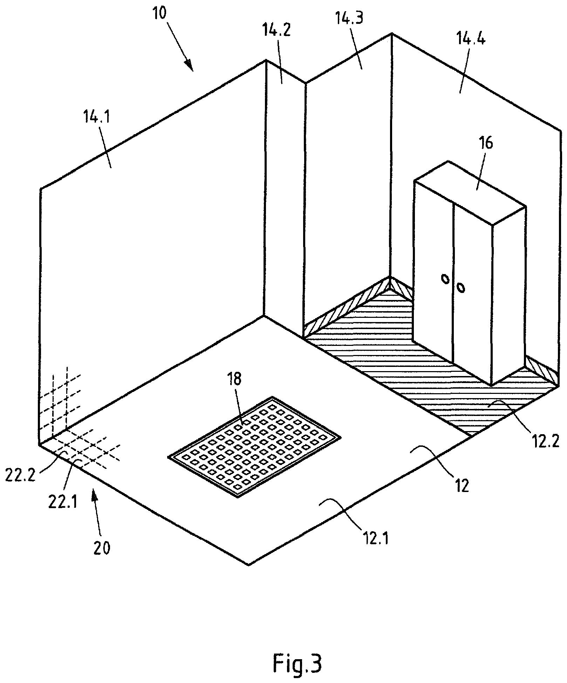

Bevor die Verarbeitung der dreidimensionalen Daten näher erläutert wird, wird zunächst mittels der Figur 3 ein beispielhafter, dreidimensionaler Raum beschrieben. Der Raum 10 weist einen Fußbodenbereich 12, Wände 14.1 bis 14.4 und eine (nicht gezeigte) Decke auf. Der Fußbodenbereich 12 ist zudem in zwei unterschiedliche Teilbereiche 12.1 und 12.2 unterteilt. Beispielsweise ist vorstellbar, dass unterschiedliche Fußbodenbelege, wie zwei unterschiedliche Holzdekore, verlegt sind.

In dem Raum können sich Möbel 16 befinden. Beispielhaft ist ein Schrank 16 gezeigt. Zudem liegt im vorliegenden Ausführungsbeispiel ein Teppich 18 auf dem Fußbodenbereich 12.

Wie ferner zu erkennen und mit dem Bezugszeichen 20 kenntlich gemacht ist, werden die dreidimensionalen Bilddaten des Raums 10 von dem Rastermodul 2.1 in eine Mehrzahl von Subbereichen 22.1, 22.2 unterteilt (dies ist in der Regel nicht sichtbar und dient nur zur Veranschaulichung). Für eine bessere Übersicht ist das Raster relativ groß gewählt und nur im Bereich 20 dargestellt. Sämtliche dreidimensionale Bilddaten können beispielsweise mit dem Raster überlagert werden. Die Auflösung wird vorzugsweise derart gewählt, dass eine ausreichende Differenzierung der verschiedenen Komponenten des Raums 10, insbesondere zwischen den Fußbodenbereichen 12 und den nicht Fußbodenbereichen 14.1 bis 14.4, 16, 18 erzielt werden kann. Dies kann insbesondere auf durchgeführten Testreihen basieren und/oder individuell in Abhängigkeit des Raums bestimmt werden.

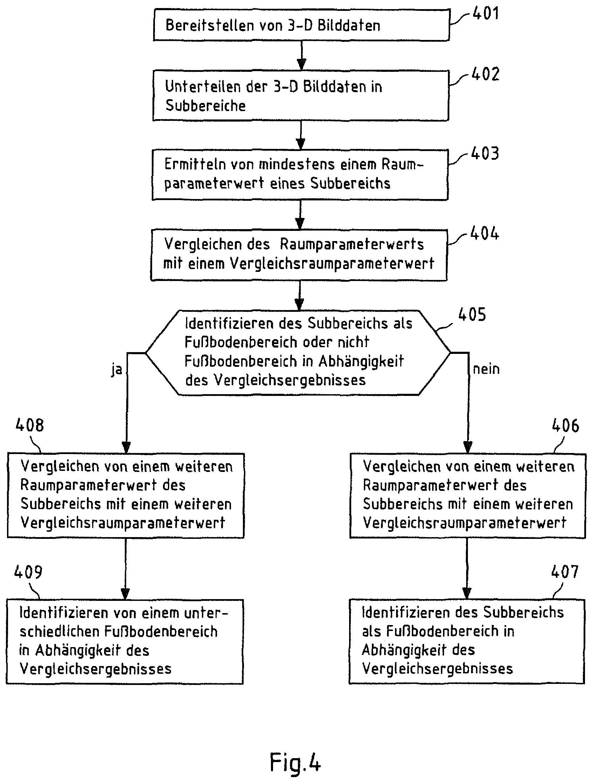

Die Figur 4 zeigt ein Ausführungsbeispiel eines Verfahrens gemäß der vorliegenden Erfindung. Insbesondere wird die Erfassung von dreidimensionalen Bilddaten und deren Verarbeitung anhand der Figuren 1 bis 3 näher erläutert.

In einem ersten Schritt 401 werden beispielsweise von einer optischen Erfassungseinrichtung 8 dreidimensionale Bilddaten bereitgestellt. Die dreidimensionalen Bilddaten umfassen Bildkoordinatendaten. In einem Beispiel können die Bildkoordinatendaten (x, y, z) zu den Abmessungen Länge (x), Breite (y) und Höhe (z) unmittelbar korrespondieren. Bei anderen Bildkoordinatendaten kann eine Koordinatentransformation erforderlich sein.

Wie zuvor beschrieben, werden in einem Schritt 402 die dreidimensionalen Bilddaten in eine Mehrzahl von Subbereichen 22.1, 22.2 von dem Rastermodul 2.1 unterteilt. In einem nächsten Schritt 403 wertet das Auswertemodul 2.2 die bereitgestellten dreidimensionalen Bilddaten aus. Vorzugsweise wird aus den dreidimensionalen Bilddaten für jeden Subbereich 22.1, 22.2 dessen Höhenangabe (im Vergleich zu einem Bezugspunkt) ermittelt. Als Bezugspunkt kann beispielsweise manuell oder automatisch der tiefste Punkt des Raums, insbesondere ein Punkt des Fußbodenbereichs 12 festgelegt und beispielsweise auf null gesetzt werden. Beispielsweise kann der Bezugspunkt durch das Kalibrierungsmodul 2.5 bestimmt werden. Das Auswertemodul 2.2 bestimmt insbesondere für sämtliche Subbereiche 22.1, 22.2 deren Höhenangabe. Bei dem oben genannten Koordinatensystem kann aus der z-Komponente des Koordinatenvektors die Höhenangabe hs in einfacher Weise abgeleitet werden.

Alternativ oder zusätzlich zu der Subbereichshöhenangabe kann das Auswertemodul 2.2 weitere Raumparameterwerte für einen Subbereich ermitteln. Beispielsweise kann ein Steigungswert bestimmt werden. In einer bevorzugten Ausführungsform wird ein sichtbarer Oberflächenparameterwert, wie ein Farbwert und/oder ein Strukturwert des Subbereichs, als Raumparameterwert des Subbereichs ermittelt. Vorzugsweise kann eine Mehrzahl von Farbwerten, wie ein Helligkeitswert, ein Farbwinkelwert, ein Farbintensitätswert und/oder dergleichen ermittelt werden. Die entsprechenden sichtbaren Oberflächenparameterwerte können aus den dreidimensionalen Bilddaten, wie den darin enthaltenen Farbinformationen und/oder aus einer Datenbank, in der vorgegebene Farb- und Strukturmuster hinterlegt sind, abgeleitet werden.

Der mindestens eine Raumparameterwert eines Subbereichs 22.1, 22.2 wird dann in einem nächsten Schritt 404 von dem Vergleichsmodul 2.3 mit einem zugehörigen Vergleichsraumparameterwert verglichen. Das Vergleichsmodul 2.2 kann zum Beispiel die Höhenangabe hs eines Subbereichs 22.1, 22.2, wie dessen z-Komponente des Koordinatenvektors, mit einer Vergleichshöhenangabe hver vergleichen. Als Vergleichshöhenangabe hver kann beispielweise der Bezugspunkt null mit einem Toleranzbereich (z.B. zum Ausgleichen von Erfassungsungenauigkeiten oder Bodenunebenheiten) gesetzt werden. Die Vergleichshöhenangabe kann beispielsweise im Bereich von 1 mm bis einigen wenigen cm, vorzugsweise zwischen 2 mm und 1 cm liegen. Insbesondere kann sie so gewählt werden, dass geringfügige Bodenunebenheiten toleriert, aber beispielsweise der Teppich 18 von dem Fußbodenbereich 12 differenziert werden kann. Es versteht sich, dass die exakten Werte von der Auflösung aber auch von den Gegebenheiten vor Ort, wie beispielsweise erheblichen Bodenunebenheiten, abhängen können. Es versteht sich ferner, dass die Subbereiche 22.1, 22.2 entsprechend klein gewählt werden müssen.

Falls ein mindestens ein weiterer oder ein anderer Raumparameterwert ermittelt worden ist, kann das Vergleichsmodul 2.2 diesen mit einem zugehörigen Vergleichsraumparameterwert vergleichen.

In Abhängigkeit des Vergleichsergebnisses identifiziert das Identifizierungsmodul 2.4, ob es sich bei dem Subbereich 22.1, 22.2 um einen Fußbodenbereich 12 handelt (ja) oder nicht (nein). Übersteigt beispielsweise die Höhenangabe die Vergleichshöhenangabe (hs > hver), so wird der zugehörige Subbereich zumindest vorläufig als ein Subbereich identifiziert und insbesondere gekennzeichnet, als nicht zum Fußbodenbereich gehörend. Übersteigt der ermittelte Höhenwert des Subbereichs 22.1, 22.2 den Vergleichshöhenwert nicht (hs ≤ hver) (positives Ergebnis), identifiziert das Identifizierungsmodul 2.3 diesen Subbereich 22.1, 22.2 als Fußbodenbereich und kann ihn entsprechend kennzeichnen. Beispielsweise kann zur Kennzeichnung mindestens ein bit gesetzt oder nicht gesetzt werden.

In einem bevorzugten Ausführungsbeispiel können zusätzlich die weiteren Schritte 406 und 407 vorgesehen sein. Es ist erkannt worden, dass bei bestimmten Fußbodenbereichen, wie Treppenbereichen, der Höhenwert hs eines Subbereichs 22.1, 22.2 kein hinreichendes Kriterium zur Identifizierung eines Fußbodenbereichs ist. In dem optionalen Schritt 406 kann das Vergleichsmodul 2.3 den mindestens einen ermittelten sichtbaren Oberflächenparameterwert Os eines Subbereichs mit einem Vergleichsoberflächenparameterwert Over vergleichen.

Der Vergleichsoberflächenparameterwert kann in einem vorherigen Schritt von einem Kalibrierungsmodul 2.5 bestimmt worden sein. Insbesondere kann das Kalibrierungsmodul 2.5 eingerichtet sein, als Vergleichsoberflächenparameterwert den Oberflächenwert Osi eines bereits in Schritt 405 als Fußbodenbereich identifizierten Subbereichs 22.1, 22.2 zu setzen (Over = O_{S1}). Vorzugsweise kann ein direkt benachbarter Subbereich 22.1, 22.2 als Referenzsubbereich herangezogen werden.

In dem weiteren Vergleichsschritt 406 kann der Oberflächenwert Os eines zunächst nicht als Fußbodenbereich identifizierten Subbereichs 22.1, 22.2 mit dem oben genannten Vergleichsoberflächenparameterwert (Over = Osi) verglichen werden. Beispielsweise kann ein Farbwert und/oder Strukturwert herangezogen werden. Das Vergleichsergebnis kann dem Identifizierungsmodul bereitgestellt werden. Ist das Vergleichsergebnis positiv (Os ≈ Over), so wird der zuvor nicht als Fußbodenbereich identifizierte Subbereich 22.1, 22.2 als Fußbodenbereich von dem Identifizierungsmodul 2.4 in Schritt 407 identifiziert und kann entsprechend gekennzeichnet werden. Bei einem negativen Ergebnis (Os ≉ Over) bleibt der Subbereich 22.1, 22.2 als nicht zum Fußbodenbereich gekennzeichnet. Eine entsprechende Vorgehensweise kann beispielsweise zur Identifizierung von Treppenstufen, Fußleisten, etc. vorgesehen sein.

Es versteht sich, dass weitere Regeln zur Identifizierung von Fußbodenbereichen implementiert sein können. So kann beispielsweise die Höhenentfernung eines Subbereichs 22.1, 22.2 zu einem als Fußbodenbereich identifizierten Subbereich 22.1, 22.2 zur Identifizierung von Fußbodenleisten genutzt werden. Auch können prägnante geometrische Verläufe von Objekten, wie Form der Fußbodenleisten und Ort von deren Anbringung (stets am Rand eines Fußbodenbereichs), Möbelfüße, Türen, etc. in einer Datenbank hinterlegt sein. Durch Vergleich der hinterlegten Bilddaten mit den bereitgestellten dreidimensionalen Bilddaten können bestimmte Objekte von dem Identifizierungsmodul 2.4 als zum Bodenbereich gehörend oder nicht zum Bodenbereich gehörend identifiziert werden.

Ferner kann der oben genannte Vergleichsoberflächenparameterwert auch zur Differenzierung von zwei verschiedenen Fußbodenbereichen 12.1 und 12.2 herangezogen werden. In dem optionalen Schritt 408 können ein sichtbarer Oberflächenparameter eines bereits als Fußbodenbereich identifizierten Subbereichs 22.1, 22.2 mit dem oben genannten Vergleichsoberflächenparameterwert (Over = Osi) verglichen werden. Beispielsweise kann ein Farbwert und/oder Strukturwert herangezogen werden. Das Vergleichsergebnis kann dem Identifizierungsmodul bereitgestellt werden. Ist das Vergleichsergebnis positiv (Os ≈ Over), so wird der Subbereich 22.1, 22.2 als zu dem ersten Fußbodenbereich zugehörender Fußbodenbereich von dem Identifizierungsmodul 2.4 in Schritt 409 identifiziert und kann entsprechend gekennzeichnet werden. Bei einem negativen Ergebnis (Os ≉ Over) wird der Subbereich 22.1, 22.2 als ein weiterer Fußbodenbereich von dem Identifizierungsmodul 2.4 in Schritt 409 identifiziert und kann entsprechend gekennzeichnet werden.

Es versteht sich, dass bei drei oder noch mehr unterschiedlichen Fußbodenbereichen eine entsprechende Anzahl von Vergleichsoberflächenparameterwerten von dem Kalibrierungsmodul 2.5 bestimmt werden kann und eine entsprechende Anzahl von Vergleichen (Schritte 406 oder 408) durchgeführt werden.

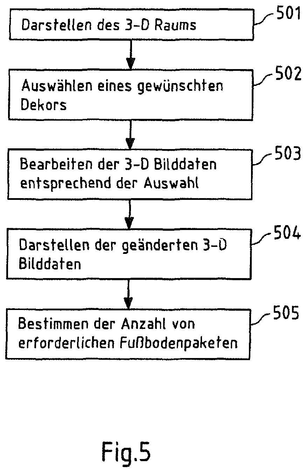

Figur 5 zeigt ein weiteres Ausführungsbeispiel des erfindungsgemäßen Verfahrens, nach dem alle relevante Subbereiche 22.1, 22.2 untersucht und sämtliche Fußbodenbereiche identifiziert (und gekennzeichnet) sind, kann der dreidimensionale Raum beispielsweise auf dem Bildschirm 6 angezeigt werden (Schritt 501). Durch Benutzeraktion(en), beispielsweise via einer Tastatur des mobilen Geräts 2 oder des Touchscreens 6, wird dem Benutzer ermöglicht, die identifizierten Fußbodenbereiche mit einem gewünschten Fußbodendekor zu überlagern (502). Hierzu kann auf in der Datenbank hinterlegte Bilddaten der Fußbodendekore zurückgegriffen werden. Neben einer Auswahl des Fußbodendekors kann optional das Verlegemuster ausgewählt werden. Das Bildbearbeitungsmodul 2.7 erfasst den Fußbodenbereich anhand der Kennzeichnung der dreidimensionalen Bilddaten und ändert diese derart, dass das gewünschte Dekor angezeigt wird (Schritt 503, 504). Der Benutzer kann sich einen möglichst realistischen Eindruck des Raums mit dem neuen Dekor machen.

Nach der endgültigen Auswahl kann in einem Schritt 505 die erforderliche Anzahl von Fußbodenpaketen von dem Kalkulationsmodul 2.6 bestimmt werden. Hierzu ist das Kalkulationsmodul 2.6 eingerichtet, die Fläche des Fußbodenbereichs insbesondere aus den Bildkoordinatendaten (z.B. die Angaben (x, y) des Koordinatenvektors) der als Fußbodenbereiche identifizierten Subbereiche 22.1, 22.2 zu bestimmen. Zusätzlich kann der Verlauf des Umfangs eines Fußbodenbereichs bestimmt werden. Dies verbessert die Genauigkeit der Bestimmung. Zudem lassen sich die Anzahl der evtl. erforderlichen Fußbodenleisten bzw. Fußbodenleistenpakete und deren Befestigungsmittel bestimmen.

Die dreidimensionalen Bilddaten können abgespeichert und beispielsweise von einem Bodenverleger zur Verlegung genutzt werden. Beispielsweise kann der Bodenverleger eine Ausführungsform eines erfindungsgemäßen mobilen Gerät 4 oder alternativ ein mobiles Gerät haben, das z.B. über ein Kommunikationsnetz auf die dreidimensionalen Bilddaten am Ort des Raums zugreifen kann. Dann kann sich der Bodenverleger den virtuellen Raum mit dem neuen Fußbodendekor anzeigen lassen und den Fußboden exakt nach dem angezeigten Verlegemuster verlegen.

Mit anderen Worten eröffnen Aspekte der zuvor beschriebenen Ausführungsformen einem Bodenleger die Möglichkeit, den Raum eines Kunden in 3D zu erfassen und in Folge eine Fußbodenkollektion live bzw. in Echtzeit, maßstabsgetreu, perspektivisch korrekt und photorealistisch im Raum des Kunden zu verlegen. Es kann auch möglich sein, per Knopfdruck eine Materialbedarfsberechnung durchzuführen.

Der Anwender kann beispielsweise eine Anwendung auf einem mobilen Gerät 4, in welchem sich eine Schnittstelle zur 3D Bildbearbeitungskomponente befindet, starten. Nun kann mittels des mobilen Endgerätes (z. B. iOS oder Android Tablet) ein beliebiger Raum gescannt werden. Die Raumelemente werden durch die 3D Bildbearbeitungskomponente erkannt und gemäß ihrer Zugehörigkeit für die Weiterverarbeitung durch die erfindungsgemäße Vorrichtung separiert - z. B. wird der Boden als gesamt Fläche erkannt werden.

Es ist dann möglich die Fußbodenfläche mit den Fußboden-Dekoren, die in der Anwendung hinterlegt sind, zu belegen. Die Darstellung des Fußbodens erfolgt insbesondere maßstabsgetreu, perspektivisch korrekt und photorealistisch. Im Idealfall erkennt die erfindungsgemäße Vorrichtung, wenn zwei verschiedene Böden in einem Raum verlegt sind. Dann kann es möglich sein, die Flächen unterschiedlich zu belegen. Desweitern kann es auch möglich sein, das ausgewählte Dekor in 45° und 90° zu drehen. Auch der Versatz der Dielen (regelmäßig oder unregelmäßig) kann veränderbar sein. Es kann möglich sein die Verlegung direkt in einem Mode vorzunehmen. Es kann aber auch die Möglichkeit bestehen, das Bild für eine spätere Bearbeitung in der Anwendung abzuspeichern. Neben dem Belegen von Dekoren kann es zudem möglich sein, zu berechnen, wie viele Pakete eines Fußbodendekores für die vollflächige Belegung inkl. Verschnitt eines Raums notwendig sind. Die Anwendung funktioniert vorzugsweise in allen Sprachen und berücksichtigt die Zuordnung der Dekore zu unterschiedlichen Vertriebsregionen.

Mit anderen Worten kann eine möglichst automatisierte Erkennung der Bodenbereiche auf Basis des erfassten 3D Modells bei gleichzeitigem Erhalt der Größeninformationen, die beim Scannen des 3D Modells erfasst wurden, erfolgen. Ferner kann insbesondere eine Integration einer Software- und/oder Hardwarelösung, die die dekorativen Oberflächen maßstabsgetreu, perspektivisch korrekt und photorealistisch auf den über die 3D Erfassung erkannten Raumelementen verlegt, bereitgestellt werden.

## Patentansprüche

1. Vorrichtung (2) zum Identifizieren von mindestens einem mit einem Fußbodendekor zu überlagernden Fußbodenbereich (12, 12.1, 12.2) eines dreidimensionalen Raums (10), **dadurch gekennzeichnet, dass** die Vorrichtung (2) umfasst:
- ein Rastermodul (2.1) eingerichtet zum Unterteilen von bereitgestellten dreidimensionalen Bilddaten des Raums (10) in eine Mehrzahl von Subbereichen (22.1, 22.2) durch Überlagern der dreidimensionalen Bilddaten mit einem Raster,
- ein Auswertemodul (2.2) eingerichtet zum Ermitteln von mindestens einem Raumparameterwert von einer Mehrzahl von benachbarten Subbereichen (22.1, 22.2) aus bereitgestellten Bildkoordinatendaten der dreidimensionalen Bilddaten der benachbarten Subbereiche (22.1, 22.2), wobei als Raumparameterwert eine Steigung aus den mindestens zwei aus den Bildkoordinatendaten bestimmbaren Höhenangaben der benachbarten Subbereiche bestimmt wird,
- ein Vergleichsmodul (2.3) eingerichtet zum Vergleichen des ermittelten Raumparameterwerts der benachbarten Subbereiche (22.1, 22.2) mit einem Vergleichsraumparameterwert in Form einer Vergleichsgesamtsteigung, und
- ein Identifizierungsmodul (2.4) eingerichtet zum Identifizieren der benachbarten Subbereiche (22.1, 22.2) als zumindest einen Teil eines Fußbodenbereichs (12, 12.2, 12.2) wenn die Steigung der benachbarten Subbereiche (22.1, 22.2) unterhalb der Vergleichsgesamtsteigung liegt, und
- ein Bildbearbeitungsmodul (2.7) eingerichtet zum Überlagern des mindestens einen identifizierten Fußbodenbereichs (12, 12.1, 12.2) der dreidimensionalen Bilddaten des Raums (10) mit mindestens einem Fußbodendekor.

2. Vorrichtung (2) nach Anspruch 1, **dadurch gekennzeichnet, dass**
- das Auswertemodul (2.2) zum Ermitteln eines sichtbaren Oberflächenparameterwerts des Subbereichs (22.1, 22.2), insbesondere eines Farbwerts und/oder eines Strukturwerts des Subbereichs (22.1, 22.2), aus den dreidimensionalen Bilddaten eingerichtet ist, und
- das Vergleichsmodul (2.3) zum Vergleichen des ermittelten sichtbaren Oberflächenparameterwerts des Subbereichs (22.1, 22.2) mit einem Vergleichsoberflächenparameterwert in einem weiteren Vergleichsschritt eingerichtet ist.

3. Vorrichtung (2) nach Anspruch 2, **dadurch gekennzeichnet, dass** die Vorrichtung (2) ein Kalibrierungsmodul (2.5) eingerichtet zum Bestimmen des Vergleichsoberflächenparameterwert abhängig von einem bereits als Fußbodenbereich (12, 12.1, 12.2) identifizierten Subbereich (22.1, 22.2) umfasst.

4. Vorrichtung (2) nach einem der vorherigen Ansprüche, **dadurch gekennzeichnet, dass**
- das Bildbearbeitungsmodul (2.7) zum Bereitstellen der überlagerten Bilddaten für eine Anzeigeeinrichtung (6) eingerichtet ist.

5. Vorrichtung (2) nach einem der vorherigen Ansprüche, **dadurch gekennzeichnet, dass**
- die Vorrichtung (2) ein Kalkulationsmodul (2.6) eingerichtet zum Bestimmen der Fußbodenfläche des identifizierten Fußbodenbereichs (12, 12.1, 12.2) umfasst, und
- das Kalkulationsmodul (2.6) zum Bestimmen der Anzahl von für den identifizierten Fußbodenbereich (12, 12.1, 12.2) erforderlichen Fußbodenpakete basierend auf der bestimmten Fußbodenfläche eingerichtet ist.

6. Vorrichtung (2) nach Anspruch 5, **dadurch gekennzeichnet, dass**
- das Kalkulationsmodul (2.6) zum Bestimmen eines geometrischen Verlaufs des Umfangs der bestimmten Fußbodenfläche eingerichtet ist, und
- das Kalkulationsmodul (2.6) zum Bestimmen der Anzahl der für den identifizierten Fußbodenbereich erforderlichen Fußbodenpakete basierend auf dem bestimmten Verlauf des Umfangs eingerichtet ist.

7. Mobiles Gerät (4) umfassend mindestens eine Vorrichtung (2) nach einem der vorherigen Ansprüche.

8. Mobiles Gerät (4) nach Anspruch 7, **dadurch gekennzeichnet, dass**
- das mobile Gerät (4) mindestens eine optische Erfassungseinrichtung (8) eingerichtet zum Erfassen eines dreidimensionalen Raums (10) und zum Bereitstellen von dreidimensionalen Bilddaten des Raums (10) umfasst, und/oder
- das mobile Gerät (4) mindestens eine Anzeigeeinrichtung (6) eingerichtet zum Darstellen des dreidimensionalen Raums (10) umfasst.

9. Verfahren zum Identifizieren von mit einem Fußbodendekor zu überlagernden Fußbodenbereichen (12, 12.1, 12.2) eines dreidimensionalen Raums (10), umfassend:
- Unterteilen, durch ein Rastermodul 2.1), von bereitgestellten dreidimensionalen Bilddaten des Raums (10) in eine Mehrzahl von Subbereichen (22.1, 22.2) durch Überlagern der dreidimensionalen Bilddaten mit einem Raster,
- Ermitteln, durch ein Auswertemodul (2.2), von mindestens einem Raumparameterwert von einer Mehrzahl von benachbarten Subbereichen (22.1, 22.2) durch Untersuchen von bereitgestellten Bildkoordinatendaten der dreidimensionalen Bilddaten der benachbarten Subbereiche (22.1, 22.2), wobei als Raumparameterwert eine Steigung aus den mindestens zwei aus den Bildkoordinatendaten bestimmbaren Höhenangaben der benachbarten Subbereiche bestimmt wird,
- Vergleichen, durch ein Vergleichsmodul (2.3), des ermittelten Raumparameterwerts der benachbarten Subbereiche (22.1, 22.2) mit einem Vergleichsraumparameterwert in Form einer Vergleichsgesamtsteigung,
- Identifizieren, durch ein Identifizierungsmodul (2.4), der benachbarten Subbereiche (22.1, 22.2) als zumindest einen Teil eines Fußbodenbereichs (12, 12.1, 12.2) wenn die Steigung der benachbarten Subbereiche (22.1, 22.2) unterhalb der Vergleichsgesamtsteigung liegt, und
- Überlagern, durch ein Bildbearbeitungsmodul (2.7), des mindestens einen identifizierten Fußbodenbereichs (12, 12.1, 12.2) der dreidimensionalen Bilddaten des Raums (10) mit mindestens einem Fußbodendekor.

10. Verfahren nach Anspruch 9, **dadurch gekennzeichnet, dass** die dreidimensionalen Bilddaten des Raums (10) in Subbereiche gleicher Größe und/oder Form unterteilt werden.

11. Computerprogram mit Instruktionen ausführbar auf einem Prozessor derart, dass ein Verfahren nach Anspruch 9 oder 10 ausgeführt wird.

## Claims

1. Device (2) for identifying at least one floor area (12, 12.1, 12.2) of a three-dimensional room (10) to be superimposed with a floor decor, **characterized in that** the device (2) comprises:
- a raster module (2.1) configured to divide provided three-dimensional image data of the room (10) into a plurality of sub-areas (22.1, 22.2) by superimposing the three-dimensional image data with a raster,
- an evaluation module (2.2) configured to determine at least one room parameter value of a plurality of adjacent sub-areas (22.1, 22.2) from provided image coordinate data of the three-dimensional image data of the adjacent sub-areas (22.1, 22.2), wherein as a room parameter value a slope is determined from the at least two height data of the adjacent sub-areas determinable from the image coordinate data,
- a comparison module (2.3) configured to compare the determined room parameter value of the adjacent sub-areas (22.1, 22.2) with a comparison room parameter value in the form of a comparison total slope, and
- an identification module (2.4) configured to identify the adjacent sub-areas (22.1, 22.2) as at least part of a floor region (12, 12.2, 12.2) when the slope of the adjacent sub-areas (22.1, 22.2) is below the comparison total slope, and
- an image processing module (2.7) configured to superimpose the at least one identified floor region (12, 12.1, 12.2) of the three-dimensional image data of the room (10) with at least one floor decor.

2. Device (2) according to claim 1, **characterized in that**
- the evaluation module (2.2) is configured to determine a visible surface parameter value of the sub-area (22.1, 22.2), in particular, a color value and/or a texture value of the sub-area (22.1, 22.2), from the three-dimensional image data, and
- the comparison module (2.3) is configured to compare the determined visible surface parameter value of the sub-area (22.1, 22.2) with a comparison surface parameter value in a further comparison step.

3. Device (2) according to claim 2, **characterized in that** the device (2) comprises a calibration module (2.5) configured to determine the comparison surface parameter value depending on a sub-area (22.1, 22.2) already identified as a floor area (12, 12.1, 12.2).

4. Device (2) according to any one of the preceding claims, **characterized in that**
- the image processing module (2.7) is configured to provide the superimposed image data to a display device (6).

5. Device (2) according to one of the previous claims, **characterized in that**
- the device (2) comprises a calculation module (2.6) configured to determine the floor area of the identified floor region (12, 12.1, 12.2), and
- the calculation module (2.6) is configured to determine the number of floor packages required for the identified floor region (12, 12.1, 12.2) based on the determined floor area.

6. Device (2) according to claim 5, **characterized in that**
- the calculation module (2.6) is configured to determine a geometric course of the perimeter of the determined floor area, and
- the calculation module (2.6) is configured to determine the number of floor packages required for the identified floor area based on the determined course of the perimeter.

7. Mobile device (4) comprising at least one device (2) according to any of the previous claims.

8. Mobile device (4) according to claim 7, **characterized in that**
- the mobile device (4) comprises at least one optical detection device (8) configured to detect a three-dimensional room (10) and to provide three-dimensional image data of the room (10),
and/or
- the mobile device (4) comprises at least one display device (6) configured to display the three-dimensional room (10).

9. Method for identifying floor areas (12, 12.1, 12.2) of a three-dimensional room (10) to be superimposed with a floor decor, comprising:
- dividing, by a raster module (2.1), provided three-dimensional image data of the room (10) into a plurality of sub-areas (22.1, 22.2) by superimposing the three-dimensional image data with a raster,
- determining, by an evaluation module (2.2), at least one room parameter value of a plurality of adjacent sub-areas (22.1, 22.2) by examining provided image coordinate data of the three-dimensional image data of the adjacent sub-regions (22.1, 22.2), wherein as room parameter value a slope is determined from the at least two height data of the adjacent sub-areas determinable from the image coordinate data,,
- comparing, by a comparison module (2.3), the determined room parameter value of the adjacent sub-areas (22.1, 22.2) with a comparison room parameter value in the form of a comparison total slope,
- identifying, by an identification module (2.4), the adjacent sub-areas (22.1, 22.2) as at least part of a floor region (12, 12.1, 12.2) when the slope of the adjacent sub-areas (22.1, 22.2) is below the comparison total slope, and
- superimposing, by an image processing module (2.7), the at least one identified floor region (12, 12.1, 12.2) of the three-dimensional image data of the room (10) with at least one floor decor.

10. Method according to claim 9, **characterized in that** the three-dimensional image data of the room (10) is divided into sub-areas of equal size and/or shape.

11. Computer program with instructions executable on a processor such that a method according to claim 9 or 10 is carried out.

## Revendications

1. Dispositif (2) permettant d'identifier au moins une zone de plancher (12, 12.1, 12.2) d'un espace tridimensionnel (10) à recouvrir d'une décoration de plancher, **caractérisé en ce que** le dispositif (2) comprend :
- un module de trame (2.1) configuré pour subdiviser des données d'image tridimensionnelles fournies de l'espace (10) en une pluralité de sous-zones (22.1, 22.2) en superposant les données d'image tridimensionnelles avec une trame,
- un module d'évaluation (2.2) configuré pour déterminer au moins une valeur de paramètre d'espace d'une pluralité de sous-zones (22.1, 22.2) adjacentes à partir de données de coordonnées d'image fournies des données d'image tridimensionnelles des sous-zones (22.1, 22.2) adjacentes, un gradient étant déterminé en tant que valeur de paramètre d'espace à partir d'au moins deux informations de hauteur pouvant être déterminées à partir des données de coordonnées d'image des sous-zones adjacentes,
- un module de comparaison (2.3) configuré pour comparer la valeur de paramètre d'espace déterminée des sous-zones (22.1, 22.2) adjacentes avec une valeur de paramètre d'espace de comparaison sous la forme d'un gradient total de comparaison, et
- un module d'identification (2.4) configuré pour identifier les sous-zones (22.1, 22.2) adjacentes en tant qu'au moins une partie d'une zone de plancher (12, 12.2, 12.2) lorsque le gradient des sous-zones (22.1, 22.2) adjacentes se situe en dessous du gradient total de comparaison, et
- un module de traitement d'image (2.7) configuré pour superposer l'au moins une zone de plancher (12, 12.1, 12.2) identifiée des données d'image tridimensionnelles de l'espace (10) avec au moins une décoration de plancher.

2. Dispositif (2) selon la revendication 1, **caractérisé en ce que**
- le module d'évaluation (2.2) est configuré pour déterminer une valeur de paramètre de surface visible de la sous-zone (22.1, 22.2), en particulier une valeur de couleur et/ou une valeur de structure de la sous-zone (22.1, 22.2), à partir des données d'image tridimensionnelles, et
- le module de comparaison (2.3) est configuré pour comparer la valeur de paramètre de surface visible déterminée de la sous-zone (22.1, 22.2) avec une valeur de paramètre de surface de comparaison dans une autre étape de comparaison.

3. Dispositif (2) selon la revendication 2, **caractérisé en ce que** le dispositif (2) comprend un module d'étalonnage (2.5) configuré pour déterminer la valeur de paramètre de surface de comparaison en fonction d'une sous-zone (22.1, 22.2) déjà identifiée comme zone de plancher (12, 12.1, 12.2).

4. Dispositif (2) selon l'une des revendications précédentes, **caractérisé en ce que**
- le module de traitement d'image (2.7) est configuré pour fournir les données d'image superposées pour un équipement d'affichage (6).

5. Dispositif (2) selon l'une des revendications précédentes, **caractérisé en ce que**
- le dispositif (2) comprend un module de calcul (2.6) configuré pour déterminer la surface de plancher de la zone de plancher (12, 12.1, 12.2) identifiée, et
- le module de calcul (2.6) est configuré pour déterminer le nombre de paquets de plancher requis pour la zone de plancher (12, 12.1, 12.2) identifiée sur la base de la surface de plancher déterminée.

6. Dispositif (2) selon la revendication 5, **caractérisé en ce que**
- le module de calcul (2.6) est configuré pour déterminer un tracé géométrique du périmètre de la surface de plancher déterminée, et
- le module de calcul (2.6) est configuré pour déterminer le nombre de paquets de plancher requis pour la zone de plancher identifiée sur la base du tracé déterminé du périmètre.

7. Appareil mobile (4) comprenant au moins un dispositif (2) selon l'une des revendications précédentes.

8. Appareil mobile (4) selon la revendication 7, **caractérisé en ce que**
- l'appareil mobile (4) comprend au moins un équipement de détection optique (8) configuré pour détecter un espace tridimensionnel (10) et pour fournir des données d'image tridimensionnelles de l'espace (10),
et/ou
- l'appareil mobile (4) comprend au moins un équipement d'affichage (6) configuré pour présenter l'espace tridimensionnel (10).

9. Procédé permettant d'identifier des zones de plancher (12, 12.1, 12.2) d'un espace tridimensionnel (10) à recouvrir d'une décoration de plancher, comprenant :
- la subdivision, par un module de trame (2.1), de données d'image tridimensionnelles fournies de l'espace (10) en une pluralité de sous-zones (22.1, 22.2) en superposant les données d'image tridimensionnelles avec une trame,
- la détermination, par un module d'évaluation (2.2), d'au moins une valeur de paramètre d'espace d'une pluralité de sous-zones (22.1, 22.2) adjacentes en examinant des données de coordonnées d'image fournies des données d'image tridimensionnelles des sous-zones (22.1, 22.2) adjacentes, un gradient étant déterminé en tant que valeur de paramètre d'espace à partir d'au moins deux informations de hauteur pouvant être déterminées à partir des données de coordonnées d'image des sous-zones adjacentes,
- la comparaison, par un module de comparaison (2.3), de la valeur de paramètre d'espace déterminée des sous-zones (22.1, 22.2) adjacentes avec une valeur de paramètre d'espace de comparaison sous la forme d'un gradient total de comparaison,
- l'identification, par un module d'identification (2.4), des sous-zones (22.1, 22.2) adjacentes en tant qu'au moins une partie d'une zone de plancher (12, 12.1, 12.2) lorsque le gradient des sous-zones (22.1, 22.2) adjacentes se situe en dessous du gradient total de comparaison, et
- la superposition, par un module de traitement d'image (2.7), de l'au moins une zone de plancher (12, 12.1, 12.2) identifiée des données d'image tridimensionnelles de l'espace (10) avec au moins une décoration de plancher.

10. Procédé selon la revendication 9, **caractérisé en ce que** les données d'image tridimensionnelles de l'espace (10) sont subdivisées en sous-zones de même taille et/ou forme.

11. Programme informatique comportant des instructions exécutables sur un processeur de telle sorte qu'un procédé selon la revendication 9 ou 10 est exécuté.
